**Europäisches Patentamt**

**European Patent Office**

**Office européen des brevets**

(19)

(11) Numéro de publication: **0 124 933**
**A1**

(12) ## DEMANDE DE BREVET EUROPEEN

(21) Numéro de dépôt: **84200578.7**

(22) Date de dépôt: **24.04.84**

(51) Int. Cl.³: **B 65 G 53/28**

(30) Priorité: **28.04.83 CH 2280/83**

(43) Date de publication de la demande:
**14.11.84 Bulletin 84/46**

(84) Etats contractants désignés:
**AT BE CH DE FR GB IT LI LU NL SE**

(71) Demandeur: **Dietrich, Frédéric**
**37, Avenue du Château**
**F-1008 Prilly(CH)**

(72) Inventeur: **Dietrich, Frédéric**
**37, Avenue du Château**
**F-1008 Prilly(CH)**

(74) Mandataire: **Meylan, Robert Maurice et al,**
**c/o BUGNION S.A. 10, route de Florissant Case Postale**
**375**
**CH-1211 Genève 12 - Champel(CH)**

(54) **Procédé de transfert des poudres et dispositif de mise en oeuvre.**

(57) Il consiste à aspirer une quantité de poudre venant d'un stock (6) dans une chambre de réception (1) munie d'un piston (2) et l'expulser vers un récipient (10) d'abord en faisant avancer le piston (2) jusqu'à sa position la plus basse et en injectant par la suite de l'air comprimé venant d'une source (12) pour faire avancer le bouchon (14) de poudre créé dans le tube de transfert (7).

EP 0 124 933 A1

Croydon Printing Company Ltd

- 1 -

Procédé de transfert des poudres et dispositif de mise
en oeuvre.

La présente invention concerne un procédé de transfert
des poudres, à partir d'un stock, par l'intermédiaire
d'une canalisation tubulaire et de moyens de propulsion
de la poudre.

De nombreux produits se présentent sous forme de poudre
tels que ciments, colorants, farines, produits
chimiques et alimentaires et dans leur cycle de
fabrication ou de fabrication d'autres produits dont
ils sont les composantes, doivent être transférés pour
être dosés, mélangés, traités.

On a proposé des dispositifs de transfert de poudres
constitués d'un tube dans lequel est mis en rotation un
boudin et qui travaille sur le principe de la vis
d'Archimède. D'autres dispositifs utilisent un courant
d'air comprimé pour propulser la poudre en suspension
dans une canalisation. Les poudres ont la propriété de
foisonner et de se maintenir en suspension dans l'air
ce qui rend le fonctionnement de ces dispositifs très
aléatoire et un dosage volumétrique est impossible.

La présente invention se propose de pallier ces inconvénients et propose un procédé permettant le transfert de poudres évitant leur foisonnement au moins dans la dernière phase du transfert.

Le procédé selon l'invention est caractérisé par le fait que l'on aspire une quantité de poudre dans une chambre de réception en faisant reculer un piston se déplaçant de façon étanche dans une première partie de la chambre et que l'on expulse la poudre vers le lieu d'utilisation d'abord en avançant le piston dans la première partie de la chambre et dès que le piston arrive à la fin de sa course en envoyant de l'air comprimé dans la seconde partie de la chambre de réception.

L'avantage de ce procédé réside sur le fait que même si la poudre lors de l'aspiration dans la chambre de réception foisonne, lors de la phase de l'expulsion vers le lieu d'utilisation elle est compactée dans un premier temps par l'avance du piston et forme un bouchon dans la seconde partie de la chambre de réception et le début de la canalisation tubulaire et lors de l'entrée de l'air comprimé elle se déplace dans la canalisation sous forme de bouchon donc sous forme compacte. La quantité d'air comprimé peut être suffisante pour pousser le bouchon jusqu'au lieu d'utilisation ou simplement de le faire avancer dans la canalisation d'une certaine longueur et ainsi de suite lors de l'arrivée du bouchon suivant. Le fait de savoir si le bouchon arrive au lieu d'utilisation lors de la première injection d'air comprimé ou lors d'une suivante dépend également de la longueur de la canalisation tubulaire entre la chambre de réception et le lieu d'utilisation.

L'invention comporte également un dispositif de mise en oeuvre du procédé caractérisé par le fait qu'il comporte une chambre de réception reliée d'une part à un stock de poudre par un tube muni d'une vanne et d'autre part au lieu d'utilisation par un deuxième tube muni d'une vanne, qu'un piston commandé par un vérin à double effet se déplace à l'intérieur d'une première partie de la chambre délimitée par l'une des extrémités de la chambre et un point intermédiaire et que la seconde partie de la chambre est reliée à au moins un tube muni d'une vanne pour l'alimentation en air comprimé.

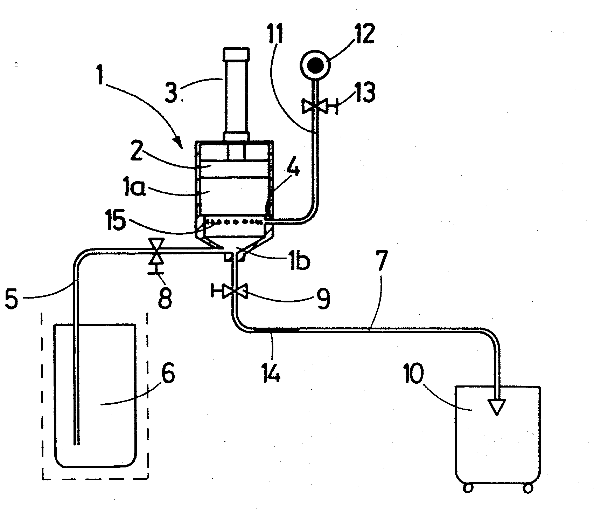

L'invention et plus particulièrement le dispositif de mise en oeuvre du procédé sera décrit plus en détail à l'aide du dessin annexé représentant à titre d'exemple une variante de l'invention.

La figure unique est une représentation schématique du dispositif de mise en oeuvre du procédé.

La chambre de réception 1 comporte une première partie 1a cylindrique et une seconde partie conique 1b. A l'intérieur de la première partie 1a se déplace de façon étanche un piston 2 entraîné par un vérin pneumatique à double effet 3. Un épaulement 4 à la partie inférieure de la partie cylindrique 1a de la chambre 1 marque la fin de course du piston 2. La seconde partie 1b de la chambre de réception 1 est reliée d'une part à un tube 5 dont l'extrémité libre est plongée dans un stock de poudre 6 constitué d'un sac ou d'un container ou d'un fût ou autre, et d'autre part à un tube 7 par lequel la poudre est acheminée au lieu d'utilisation qui est par exemple un récipient 10. Les tubes 5 et 7 sont respectivement munis des vannes 8 et 9. Enfin un tube 11 relié à une source d'air comprimé 12 et muni d'une vanne 13 est également relié à la partie supérieure de la seconde partie 1b de la chambre de réception 1. Il est préférable de prévoir plusieurs tubes 11 débouchant par des orifices 15 sur le pourtour de la partie supérieure de la chambre 1b et relié à la source d'air comprimé 12 par l'intermédiaire de la vanne 13 afin d'assurer une distribution uniforme de la pression. Il est également possible d'utiliser l'alimentation d'air comprimé du vérin pneumatique 3 à la place de la source 12. La chambre de réception 1 peut être munie d'un manteau de refroidissement selon la nature de la poudre à transférer pour éviter son échauffement lors de la phase de compression.

Le fonctionnement du dispositif est le suivant : Au départ les vannes 9 et 13 sont fermées la vanne 8 est ouverte, et le piston est en position basse contre l'épaulement 4. Le vérin 3 entraîne par le suite le piston 2 vers le haut et une quantité de poudre est aspirée du stock 6 et passe dans la chambre 1. Dès que le piston 2 arrive à la fin de sa course vers le haut on ferme la vanne 8 et on ouvre la vanne 9 et le vérin 3 pousse le piston 2 vers le bas en comprimant la poudre dans la partie de la chambre 1b et en l'expulsant par le tube 7. Lorsque le piston 2 finit sa course contre l'épaulement 4 on ouvre la vanne 13 pour injecter de l'air comprimé à l'intérieur de la chambre 1b et faire avancer le bouchon de poudre 14 dans le tube 7. La quantité d'air peut être suffisante pour que le bouchon arrive jusqu'au récipient 10 ou seulement pour le faire avancer d'une certaine longueur. Par la suite on ferme les vannes 9 et 13 et on ouvre la vanne 8 et le cycle recommence.

Il est possible d'intercaler dans le tube 7 un dispositif doseur, par exemple un doseur volumétrique, permettant par la même occasion d'effectuer un dosage précis du produit à transférer.

**0124933**

## REVENDICATIONS

1. Procédé de transfert de poudres, à partir d'un stock, par l'intermédiaire d'une canalisation tubulaire et de moyens de propulsion de la poudre, caractérisé par le fait que l'on aspire une quantité de poudre dans une chambre de réception en faisant reculer un piston se déplaçant de façon étanche dans une première partie de ladite chambre et que l'on expulse la poudre vers le lieu d'utilisation d'abord en avançant le piston dans la première partie de la chambre et dès que le piston arrive à la fin de sa course en envoyant de l'air comprimé dans la seconde partie de la chambre de réception.

2. Dispositif de transport de poudres pour la mise en oeuvre du procédé selon la revendication 1, caractérisé par le fait qu'il comporte une chambre de réception reliée d'une part à un stock de poudre par un tube muni d'une vanne et d'autre part au lieu d'utilisation par un deuxième tube muni d'une vanne, qu'un piston commandé par un vérin à double effet se déplace à l'intérieur d'une première partie de la chambre délimitée par l'une des extrémités de la chambre et un point intermédiaire et que la seconde partie de la chambre est reliée à au moins un tube muni d'une vanne par l'alimentation en air comprimé.

3. Dispositif de transfert selon la revendication 2, caractérisé par le fait que la chambre de réception est munie d'un manteau de refroidissement.

4. Dispositif de transfert selon l'une des revendications 2 ou 3, caractérisé par le fait que les

0124933

- 2 -

vannes des tubes par lesquels la chambre de réception est reliée au stock de poudre, au lieu d'utilisation et à l'alimentation en air comprimé sont munies de moyens pour être commandées cycliquement.

5. Dispositif selon l'une des revendications 2 ou 4, caractérisé par le fait que dans le circuit de poudre est intercalé un organe de dosage relié aux moyens de commande des vannes.

**0124933**

Numéro de la demande

**Office européen**
**des brevets**

**RAPPORT DE RECHERCHE EUROPEENNE**

EP 84 20 0578

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X | GB-A-1 146 275 (INSTITUTE FÜR FÖRDERTECHNIK) <br> * En entier * | 1,2 | B 65 G 53/28 |
| X | US-A-3 391 963 (WEEKS) <br> * En entier * | 1,2 | |
| X | US-A-2 151 514 (HEINEN) <br> * Page 2, colonne 2, lignes 15-34; page 4, colonne 1, lignes 28-37; figure 7 * | 1-4 | |
| A | GB-A- 967 407 (CHRISTENSEN) <br> * En entier * | 1,2 | |
| A | DE-C- 411 152 (WINTZEK) <br> * En entier * | 1,2 | **DOMAINES TECHNIQUES RECHERCHES (Int. Cl. ³)** |
| | ----- | | B 65 G <br> F 04 B |

Le présent rapport de recherche a été établi pour toutes les revendications

| Lieu de la recherche | Date d'achèvement de la recherche | Examinateur |
|---|---|---|
| LA HAYE | 17-07-1984 | OSTYN T.J.M. |